(19) Europäisches Patentamt / European Patent Office / Office européen des brevets

(11) **EP 2 985 139 A1**

(12) **EUROPEAN PATENT APPLICATION**
published in accordance with Art. 153(4) EPC

(43) Date of publication:
**17.02.2016 Bulletin 2016/07**

(51) Int Cl.:
**B32B 3/12** (2006.01)  **B32B 7/02** (2006.01)

(21) Application number: **14889783.8**

(22) Date of filing: **28.08.2014**

(86) International application number:
**PCT/JP2014/072577**

(87) International publication number:
**WO 2015/186265 (10.12.2015 Gazette 2015/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2014 JP 2014118219**
**26.08.2014 JP 2014171833**

(71) Applicant: **F Consultant Co., Ltd.**
**Osaka 567-0034 (JP)**

(72) Inventor: **AMANO, Ryotaro**
**Ibaraki-shi**
**Osaka 567-0034 (JP)**

(74) Representative: **Herzog, Fiesser & Partner**
**Patentanwälte PartG mbB**
**Immermannstrasse 40**
**40210 Düsseldorf (DE)**

(54) **LAMINATED BODY**

(57)     A laminate capable of contributing to significant energy saving is provided, which includes a honeycomb structure layer having a plurality of cells; and a heat storage layer provided on at least one side of the honeycomb structure layer, wherein at least a void is present in the cells of the honeycomb structure layer.

Fig.1

EP 2 985 139 A1

**Description**

TECHNICAL FIELD

The invention relates to a laminate that can contribute to significant energy saving.

BACKGROUND ART

In recent years, energy issues such as power supply issues have come to the fore, and it has become increasingly important to address energy saving issues.

To address energy saving issues, for example, energy saving housing is provided, which has a heat (heat storage) system (active heat storage) using nighttime electric power.

Besides the active heat (heat storage) system using electric power, studies have been recently conducted on energy saving housing with a passive heat system using no electric power. An example of energy saving housing with a passive heat system includes a building component in which the passive heat system is installed to increase the thermal capacity of the whole of the building. In such a building, cool (cool storage) at night or the cool (cool storage) of a cooling air conditioner can be stored in summer, and heat in the daytime or the heat of a heating air conditioner can be stored in winter, so that energy saving can be achieved by using the stored cool or heat to increase the air conditioning efficiency.

For example, Patent Document 1 describes a heat storage panel including a stack of a honeycomb body and a metal sheet, in which small rooms of the honeycomb body are filled with a heat storage material, so that the heat storage effect can be improved.

PRIOR ART DOCUMENT

PATENT DOCUMENT

Patent Document 1: WO2008/053853

SUMMARY OF THE INVENTION

PROBLEMS TO BE SOLVED BY THE INVENTION

Unfortunately, it is difficult to obtain a lightweight panel by the technique disclosed in Patent Document 1, although the heat storage effect can be improved. In addition, the structure disclosed in Patent Document 1 tends to conduct heat from the back side to the front side. For example, therefore, the heat temporarily stored from the back side escapes from the front side in some cases, which can make it difficult to achieve energy saving. To solve such a problem, an additional heat insulator may be provided to form a multilayer structure. However, such a structure can be thick, put a strain on the space, and have low strength.

MEANS FOR SOLVING THE PROBLEMS

As a result of intensive studies to solve the problems, the invention has been accomplished based on findings that a laminate including a honeycomb structure layer with a plurality of cells and a heat storage layer provided on at least one side of the honeycomb structure layer can have a high level of heat storage performance, lightness, and strength and contribute to significant energy saving when containing at least a void in the cells of the honeycomb structure layer.

Specifically, the invention has the following features.

1. A laminate including a honeycomb structure layer having a plurality of cells including
a heat storage layer provided on at least one side of the honeycomb structure layer, wherein
at least a void is present in the cells of the honeycomb structure layer.
2. A laminate including:

a honeycomb structure layer having a plurality of cells;
a heat storage layer provided on one side of the honeycomb structure layer; and
a base layer provided on another side of the honeycomb structure layer, wherein
at least a void is present in the cells of the honeycomb structure layer.

3. A laminate including:

a honeycomb structure layer having a plurality of cells; and
heat storage layers provided on both sides of the honeycomb structure layer, wherein
at least a void is present in the cells of the honeycomb structure layer.

4. The laminate according to any one of items 1 to 3, further including a surface layer provided on an outer side of the heat storage layer.

5. The laminate according to any one of items 1 to 4, further comprising a shielding layer provided between the honeycomb structure layer and the heat storage layer.

EFFECT OF THE INVENTION

The laminate of the invention can contribute to significant energy saving. In particular, the laminate of the invention can suppress heat transfer to the opposite side (heat transfer from the front or back side to the back or front side) and keep the interior of a space at a certain temperature for a long period of time, so that energy saving can be achieved. The laminate of the invention also has a high level of lightness and strength.

BRIEF DESCRIPTION OF THE DRAWINGS

Fig. 1 is a model diagram (perspective view) showing a laminate structure according to the invention;
Fig. 2 is a model diagram (perspective view) showing a laminate structure according to the invention;
Figs. 3(a) to 3(j) are model diagrams (cross-sectional views) showing laminate structures according to the invention;
Figs. 4(a) to 4(k) are model diagrams (cross-sectional views) showing laminate structures according to the invention;
Fig. 5 is a model diagram showing tests 1 and 2; and
Fig. 6 is a model diagram showing test 3.

DESCRIPTION OF REFERENCE SIGNS

In the drawings, reference sign 1 represents a honeycomb structure layer, 2 a cell, 3 a heat storage layer, 4 a surface layer, 5 a shielding layer, 6 a calcium silicate sheet, 7 an infrared lamp, 8 polystyrene foam, 9 a temperature sensor, and 10 a black bulb thermometer.

MODE FOR CARRYING OUT THE INVENTION

Hereinafter, modes for carrying out the invention will be described in detail.

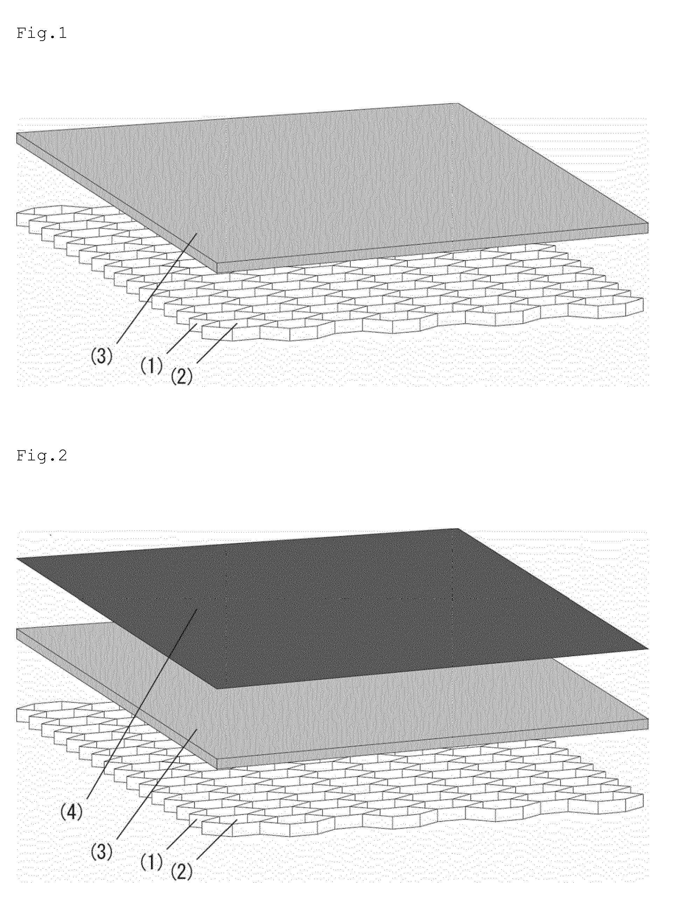

The laminate of the invention includes a honeycomb structure layer having a plurality of cells; and a heat storage layer provided on at least one side of the honeycomb structure layer, in which at least a void is present in the cells of the honeycomb structure layer (Fig. 1). The laminate with such features can store and release heat, and can also contribute to energy saving because the honeycomb structure layer having at least a void in its cells can provide an optimal heat-shielding effect and suppress heat transfer to the opposite side so that it can keep the interior of a space at a certain temperature for a longer period of time. In addition, the laminate with such features is of light weight and high strength.

In the laminate of the invention, the ratio of the thickness of the void to the thickness of the honeycomb structure layer (the void content) is preferably 30% or more (more preferably 50% or more, even more preferably 70% or more, most preferably 100%), although the void content may be at any level as long as the laminate has such a void. The void generally contains air. In some cases, however, a specific gas may be injected into the void, or the pressure in the void may be reduced or increased.

In contrast to the invention, if no void is present in the cells of the honeycomb structure layer (e.g., if the cells of the honeycomb structure layer are filled with a heat storage material), the structure will be such that the heat stored from the front or back side can easily escape from the back or front side. In this case, when a house or the like absorbs heat from the outside in summer, the stored heat can easily escape to the interior of the house or the like, which can interfere with air conditioning. In addition, even during the operation of the air conditioner, the storage of heat from the outside can continue to interfere with the air conditioning, which can make it difficult to achieve energy saving.

Examples of the honeycomb structure layer used in the invention include, but are not limited to, an aluminum honeycomb structure layer, a ceramic honeycomb structure layer, a plastic honeycomb structure layer, a paper honeycomb structure layer, a nonwoven fabric honeycomb structure layer, and the like.

In the invention, a paper honeycomb structure layer is particularly preferred. For example, a paper honeycomb structure layer made of paperboard, kraft paper, glass paper, resin impregnated paper, or the like may be used.

The honeycomb structure layer with such features preferably has a thickness of 5 mm to 50 mm (more preferably 9 mm to 40 mm, even more preferably 13 mm to 30 mm). Such a thickness makes it possible to achieve a heat-shielding effect and reductions in weight and thickness.

The honeycomb structure layer has a plurality of cells. The cells may be partitioned by cell walls made of the material mentioned above. As a non-limiting example, the shape of the cells may be circular, corrugated (triangular), tetragonal (bias shape), hexagonal (honeycomb-shaped), or the like, and the size of the cells is preferably from about 5 mm to about 30 mm. For example, the cell size may be measured as the diameter of circular cells, the height of corrugated (triangular) cells, the length of the major axis of tetragonal (bias shape) cells, or the diameter of the inscribed circle of hexagonal (honeycomb-shaped) cells.

In the invention, the heat storage layer includes a heat storage material. The heat storage layer may include a resin-bonded heat storage material, an encapsulated heat storage material, a heat storage material-impregnated porous body, a heat storage material-containing bag or case, a composite of any of the above materials, or the like.

The heat storage layer preferably has a thickness of 1 mm to 5 mm (more preferably 1.5 mm to 4.5 mm). Such a thickness makes it possible to obtain sufficient heat storage performance and achieve reductions in weight and thickness.

Examples of the heat storage material include inorganic latent heat storage materials including hydrated salts such as sodium sulfate 10-hydrate, sodium carbonate 10-hydrate, sodium hydrogen phosphate 12-hydrate, sodium thiosulfate 5-hydrate, and calcium chloride 6-hydrate; organic latent heat storage materials such as aliphatic hydrocarbons, long-chain alcohols, long-chain fatty acids, long-chain fatty acid esters, fatty acid triglycerides, and polyether compounds; and sensible heat storage materials such as concrete, stone, and brick. One or more of these heat storage materials may be used.

In the invention, latent heat storage materials are preferably used, and the use of organic latent heat storage materials is particularly preferred. Sensible heat storage materials have relatively low heat capacity and tend to dissipate heat more easily, whereas latent heat storage materials have relatively high heat capacity and are resistant to dissipation of heat to some extent. Therefore, latent heat storage materials are advantageous for the invention. In addition, the phase change temperature of organic latent heat storage materials can be easily selected depending on the intended use. For example, a certain phase change temperature can be easily achieved by mixing two or more organic latent heat storage materials with different phase change temperatures (melting points).

In the invention, it is particularly preferable to use an aliphatic hydrocarbon of 8 to 36 carbon atoms, a long-chain alcohol of 8 to 36 carbon atoms, a long-chain fatty acid of 8 to 36 carbon atoms, or a long-chain fatty acid ester of 8 to 36 carbon atoms as an organic latent heat storage material.

Examples of the aliphatic hydrocarbon include n-decane (melting point -30°C), n-undecane (melting point -25°C), n-dodecane (melting point -8°C), n-tridecane (melting point -5°C), pentadecane (melting point 6°C), n-tetradecane (melting point 8°C), n-hexadecane (melting point 17°C), n-heptadecane (melting point 22°C), n-octadecane (melting point 28°C), n-nonadecane (melting point 32°C), eicosane (melting point 36°C), docosane (melting point 44°C), and n-paraffin or paraffin wax including a mixture thereof.

Examples of the long-chain alcohol include capryl alcohol (melting point 7°C), lauryl alcohol (melting point 24°C), myristyl alcohol (melting point 38°C), stearyl alcohol (melting point 58°C), and the like.

Examples of the long-chain fatty acid include octanoic acid (melting point 17°C), decanoic acid (melting point 32°C), dodecanoic acid (melting point 44°C), tetradecanoic acid (melting point 50°C), hexadecanoic acid (melting point 63°C), octadecanoic acid (melting point 70°C), and other fatty acids.

Examples of the long-chain fatty acid ester include methyl laurate (melting point 5°C), methyl myristate (melting point 19°C), methyl palmitate (melting point 30°C), methyl stearate (melting point 38°C), butyl stearate (melting point 25°C), methyl arachidate (melting point 45°C), and the like.

Particularly during high-temperature period in summer, cool (cool storage) at night or cool (cool storage) from air conditioners should be stored and used to improve air conditioning efficiency and to contribute to energy saving. Specifically, for this purpose, the organic latent heat storage material is preferably pentadecane (melting point 6°C), n-tetradecane (melting point 8°C), n-hexadecane (melting point 17°C), n-heptadecane (melting point 22 °C), n-octadecane (melting point 28 °C), or the like (as the aliphatic hydrocarbon), capryl alcohol (melting point 7°C), lauryl alcohol (melting point 24°C), or the like (as the long-chain alcohol), octanoic acid (melting point 17°C) or the like (as the long-chain fatty acid), methyl laurate (melting point 5°C), methyl myristate (melting point 19°C), methyl palmitate (melting point 30°C), or the like (as the long-chain fatty acid ester). The use of an organic latent heat storage material with such a relatively low melting point makes it easy to improve air conditioning efficiency and to achieve energy saving, particularly in housing spaces, and also makes it easy to maintain more comfortable living spaces for a long period of time.

The heat storage layer including a resin-bonded heat storage material can be obtained by mixing the heat storage material and a resin and curing the resin. Examples of the resin include acrylic resins, silicone resins, polyester resins, alkyd resins, epoxy resins, urethane resins, phenolic resins, melamine resins, amino resins, polycarbonate resins, fluororesins, vinyl acetate resins, acrylic vinyl acetate resins, acrylic urethane resins, acrylic silicone resins, silicone-modified acrylic resins, ethylene-vinyl acetate-vinyl versatate resins, ethylene-vinyl acetate resins, vinyl chloride resins, ABS resins, AS resins, and other solvent-soluble resins, NAD resins, water-soluble resins, water-dispersible resins, solvent-free resins, or synthetic rubbers, and the like. These may be used singly or in combination of two or more.

In the invention, resins having a crosslinked structure are preferably used, such as polyol-isocyanate resins and amine-epoxy resins. The use of such resins makes it possible to obtain a heat storage layer having a crosslinked structure in which the heat storage material is supported or held and fixed.

The heat storage material and the resin may also be mixed with an additive such as a clay mineral, a surfactant, a thermally conductive material, a compatibility accelerator, a reaction accelerator, a flame retardant, a pigment, an aggregate, a viscosity modifier, a plasticizer, a buffer, a dispersing agent, a crosslinking agent, a pH adjusting agent, an antiseptic, an antifungal agent, an antibacterial agent, an anti-algae agent, a wetting agent, an antifoaming agent, a foaming agent, a leveling agent, a pigment dispersant, an anti-settling agent, an anti-sagging agent, an antifreezing agent, a lubricant, a dehydrating agent, a matting agent, an ultraviolet absorbing agent, an antioxidant, a light stabilizer, fibers, a perfume, an chemical adsorbent, a photocatalyst, or a moisture absorbing/releasing powder.

The heat storage layer having an encapsulated heat storage material can be obtained, for example, by a process that includes mixing the heat storage material and an unsaturated monomer, polymerizing the unsaturated monomer to encapsulate the heat storage material, and immobilizing the capsule with a resin or packing the capsule into a porous material, a bag, or a case. Examples of the unsaturated monomer include a (meth) acrylic monomer, an aromatic vinyl monomer, and the like. These monomers may be used singly or in combination of two or more.

The heat storage material and the unsaturated monomer may also be mixed with an additive such as an initiator, a surfactant, a buffer, a dispersing agent, a crosslinking agent, or a pH adjusting agent.

The heat storage layer including a heat storage material-impregnated porous body can be obtained, for example, by impregnating a porous material with the heat storage material by immersion, injection under increased or reduced pressure, or other processes.

Examples of the porous material include, but are not limited to, textile materials, resin foam materials, wood-based materials, and the like.

The heat storage layer including a heat storage material-containing bag or case can be obtained, for example, by filling a known bag or case of resin, rubber, metal, fibers, or the like with the heat storage material.

In the invention, the heat storage layer including a resin-bonded heat storage material is preferably used because it has a high heat storage material content and is easily formable or workable.

The content of the heat storage material in the heat storage material layer is preferably 50% by weight or more, more preferably 60% by weight or more, even more preferably 70% by weight or more, based on the total weight of the heat storage layer.

The laminate of the invention preferably further includes a surface layer placed on the outer side of the heat storage layer (Fig. 2). The surface layer may be, for example, a material for imparting a design to the surface, a material for improving heat storage and release efficiencies, a material for protecting the heat storage layer, or the like, such as a plastic sheet, a paper sheet, a fiber sheet, a leather sheet, a metal sheet, a glass sheet, a wooden sheet, an inorganic sheet, a coating film, or the like. These may be used singly or in combination of two or more.

In the invention, the surface layer preferably includes at least a metal sheet or an inorganic sheet. The metal sheet or the inorganic sheet can protect the heat storage layer and make possible efficient storage and release of heat between the space and the heat storage layer. In addition, when touched with the hand or the like, the metal sheet or the inorganic sheet can provide a cool feel in summer and a warm feel in winter.

As a non-limiting example, the metal sheet includes a metal material such as copper, aluminum, iron, brass, zinc, magnesium, or nickel. In particular, a metal sheet including a metal material of copper, aluminum, or iron is preferably used in view of easiness of working, thermal conductivity, and other properties.

The metal sheet preferably has a thickness of 0.1 mm to 1 mm (more preferably 0.15 mm to 0.9 mm, even more preferably 0.2 mm to 0.8 mm) so that it can be advantageously used in view of heat storage and release efficiencies and weight reduction.

The surface of the metal sheet may also have undergone some surface treatment.

Examples of the inorganic sheet include, but are not limited to, a slate, a gypsum board, an ALC sheet, a calcium silicate board, a cemented excelsior board, a ceramic paper sheet, a natural stone sheet, an inorganic siding board, and the like.

The inorganic sheet preferably has a thickness of 0.1 mm to 10 mm (more preferably 0.5 mm to 9 mm, even more preferably 1 mm to 8 mm).

The surface layer may have a smooth surface or an concave-convex surface. For example, a surface layer with irregularities may be used in order to improve the design or the efficiency of heat storage and heat release.

The laminate of the invention preferably further includes a shielding layer between the honeycomb structure layer and the heat storage layer. For example, the shielding layer may function to block the transfer of stored heat from the heat storage layer to the back side and to block the transfer of heat from the back side to the front side or may function to block the movement of the heat storage material from the heat storage layer to the void in the cells of the honeycomb structure layer. The presence of the shielding layer with such features makes it possible to produce a higher heat-shielding effect, to suppress heat transfer to the opposite side, and to keep the interior of a space at a certain temperature for a longer period of time, so that energy saving can be achieved.

The shielding layer may be, for example, a film of a resin such as nylon, polyester, polyethylene terephthalate, polyethylene naphthalate, vinylidene chloride, or an ethylene-vinyl acetate copolymer, a woven fabric, a nonwoven fabric, a glass cloth, or the like. In the invention, it is particularly preferable to use a film of a resin such as nylon, polyester, polyethylene terephthalate, polyethylene naphthalate, vinylidene chloride, or an ethylene-vinyl acetate copolymer. These shielding layers may be used singly or in combination of two or more.

The shielding layer preferably has a thickness of 0.01 mm to 3 mm (more preferably 0.03 mm to 1 mm). Such a thickness makes it possible to achieve a heat-shielding effect and reductions in weight and thickness.

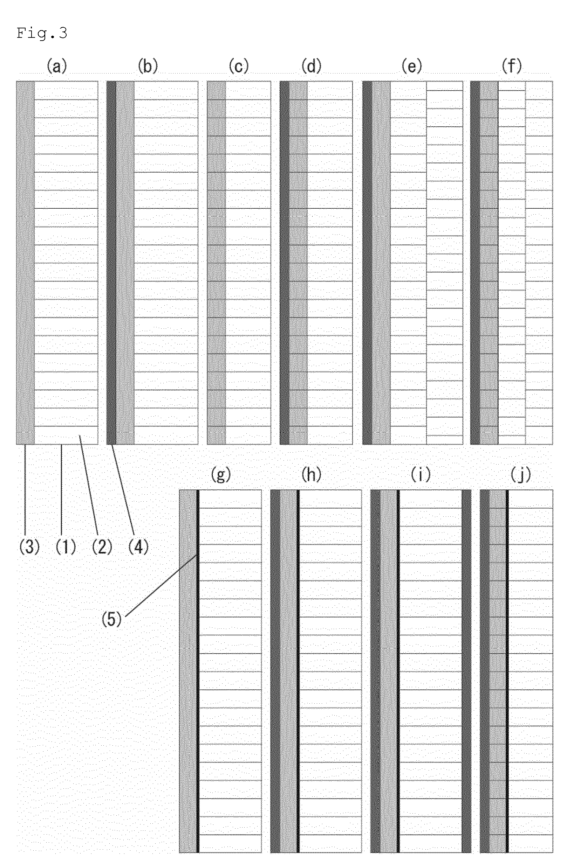

As shown in Fig. 3, for example, a first embodiment of the laminate according to the invention includes a honeycomb structure layer and a heat storage layer provided on one side of the honeycomb structure layer. A known base layer may be provided on the other side, depending on the intended use. The laminate with such features has a structure in which the cells of the honeycomb structure layer are closed by the heat storage layer. When the laminate has such a structure that the other side is further covered with a base layer or another heat storage layer, heat transfer to the other side can also be suppressed.

In Fig. 3(a), the honeycomb structure layer and the heat storage layer are independent of each other. In Fig. 3(b), the honeycomb structure layer, the heat storage layer, and the surface layer are independent of one another, in which the interiors of the cells of the honeycomb structure layer are all voids (void content 100%).

As shown in Fig. 3(c) or 3(d), the interiors of the cells of the honeycomb structure layer may be partially filled with the heat storage layer. Particularly when the laminate contains a surface layer, the surface layer is preferably placed in contact with the heat storage layer, and the surface layer and the void in the cell are preferably placed with the heat storage layer interposed therebetween. In order for the invention to be effective, the ratio of the thickness of the void to the thickness of the honeycomb structure layer (the void content) is preferably 30% or more (more preferably 50% or more).

Two or more honeycomb structure layers may be stacked (Fig. 3 (e)), in which the interiors of the cells of one of the honeycomb structure layers may be filled with the heat storage layer (Fig. 3(f)).

The laminate may further include a shielding layer between the honeycomb structure layer and the heat storage layer (Figs. 3(g), 3(h), 3(i), and 3(j)).

The base layer may be appropriately selected depending on the intended use. The base layer may be made of, for example, a heat insulating material, a concrete material, a wood-based material, a plastic material, a glass material, a metal material, an inorganic material, or the like. These base layers may be made of a sheet-shaped material, a film-shaped material, or an existing material for forming a wall surface, a ceiling, or the like.

The method of forming the laminate may be, but not limited to, a method of bonding the components with a known adhesive material or a known adhesive tape. Alternatively, when a resin-bonded heat storage material is used to form the heat storage layer, the heat storage material may be directly bonded to a surface layer, a honeycomb structure layer, or a shielding layer with a resin being formed. The laminate can also be formed using bolts, screws, nails, angles, or the like.

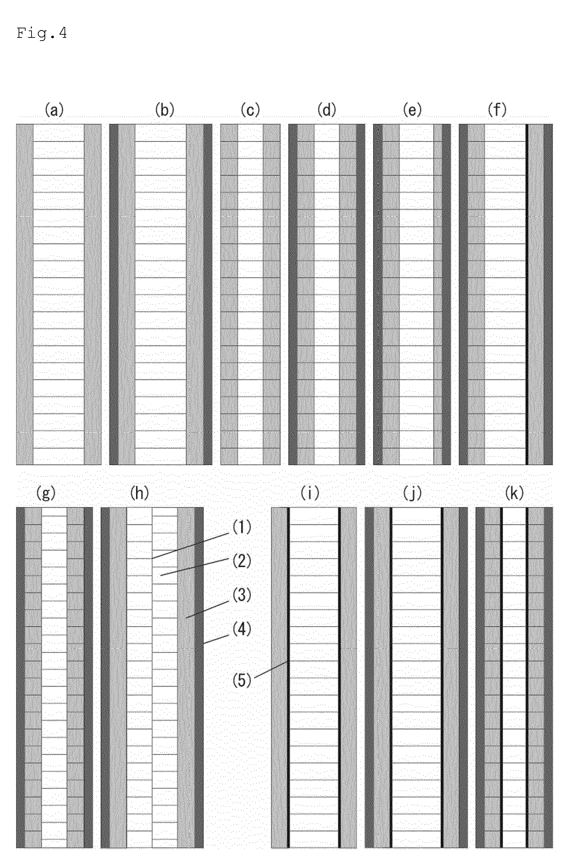

As shown in Figs. 4(a) to 4(k), for example, a second embodiment of the laminate according to the invention includes a honeycomb structure layer and heat storage layers provided on both sides of the honeycomb structure layer.

In Fig. 4 (a), the honeycomb structure layer and the heat storage layers are independent of one another other. In Fig. 4(b), the honeycomb structure layer, the heat storage layers, and the surface layers are independent of one another, in which the interiors of the cells of the honeycomb structure layer are all voids (void content 100%).

As shown in Figs. 4(c) to 4(g) and 4(k), the interiors of the cells of the honeycomb structure layer may be partially filled with the heat storage layer. Particularly when the laminate contains a surface layer, the surface layer is preferably placed in contact with the heat storage layer, and the surface layer and the void in the cell are preferably placed with the heat storage layer interposed therebetween. In order for the invention to be effective, the ratio of the thickness of the void to the thickness of the honeycomb structure layer (the void content) is preferably 30% or more (more preferably 50% or more).

As in the first embodiment, two or more honeycomb structure layers may be stacked (Figs. 4(g), 4(h), and 4(k)), and the laminate may further include a shielding layer (Figs. 4(i), 4(j), and 4(k)).

The laminate according to the second embodiment, which can produce the heat storage effect of the invention from both sides, can be effectively used as a partition, a partitioning material, or the like in a large space such as an office or an entrance hall.

When heat storage layers are provided on both sides of the honeycomb structure layer, each heat storage layer preferably has a thickness of 1 mm to 5 mm (more preferably 1.5 mm to 4.5 mm), and both heat storage layers preferably have a total thickness of 2 mm to 10 mm (more preferably 3 mm to 9 mm).

In the laminate of the invention, the heat storage material may be appropriately selected from those listed above, depending on the intended use. For example, when the laminate is for use in a living space, a heat storage material with a melting point of about 15°C to about 30°C should be used. As other examples, a heat storage material with a melting point of about 15°C to about 30°C should be used when the laminate is for use as an interior material for vehicles or the like, a heat storage material with a melting point of about 0°C to about 15°C should be used when the laminate is for use in refrigerators, and a heat storage material with a melting point of about -30°C to about -10°C should be used when the laminate is for use in freezers. A single heat storage material may be selected, or two or more heat storage materials with different melting points may be selected and mixed in such a manner that the resulting melting point falls within the above range.

The laminate of the invention is suitable for use as the following: an interior or exterior material for houses and other buildings, such as a wall material, a ceiling material, or a flooring material, a partition, a partitioning material, a door or a gate, an interior material for vehicles or the like, an industrial product for machines or instruments, or a material for thermoelectric conversion systems, refrigerators, freezers, vending machines, plants, tanks, space vehicles such as artificial satellites and rockets, bathtubs, bathrooms, greenhouses, cooler boxes, electric appliances, office automation apparatuses, office supplies, furniture, everyday sundries, or the like.

EXAMPLES

Hereinafter, the features of the invention will be more specifically described with reference to examples, which, however, are not intended to limit the invention.

Surface layer 1: A Galvalume steel sheet (a 55% molten-aluminum-zinc-alloy-plated steel sheet, 1,800 mm x 600 mm, thickness 0.4 mm)

Surface layer 2: A surface-treated aluminum sheet (1, 800 mm x 600 mm, thickness 0.6 mm)

Surface layer 3: A zinc-plated steel sheet (1,800 mm x 600 mm, thickness 0.4 mm)

Heat storage composition 1: A composition obtained by mixing and stirring 70 parts by weight of a heat storage material (methyl palmitate), 20 parts by weight of polyether polyol, 0.5 parts by weight of a catalyst (dibutyltin laurate), and 5.5 parts by weight of additives (a clay mineral, a surfactant, and a dispersing agent), further adding 4 parts by weight of hexamethylene diisocyanate, and stirring them (heat storage material content: 70% by weight)

Heat storage composition 2: A composition obtained by mixing and stirring 67 parts by weight of a heat storage material (methyl palmitate), 22.5 parts by weight of polyether polyol, 0.5 parts by weight of a catalyst (dibutyltin laurate), and 5. 5 parts by weight of additives (a clay mineral, a surfactant, and a dispersing agent), further adding 4.5 parts by weight of hexamethylene diisocyanate, and stirring them (heat storage material content: 67% by weight)

Heat storage layer 3: A layer (thickness 3 mm, heat storage material content 70% by weight) obtained by heating, melting, and mixing 70 parts by weight of a heat storage material (paraffin wax (phase change temperature 28°C)) and 20 parts by weight of a styrene-butadiene elastomer (styrene/butadiene = 40/60) at 160°C, then mixing 10 parts by weight of pearlite (bulk density 0.07 g/cm$^3$) with them at 120°C using a heating kneader to form a slurry, and extruding the slurry with an extruder.

Shielding layer 1: A polyethylene terephthalate film (thickness 0.05 mm)

Shielding layer 2: A polyethylene naphthalate film (thickness 0.1 mm)

Honeycomb structure layer 1: A paper honeycomb (thickness: 15 mm, cell shape: corrugated, cell size: 10 mm, made of corrugated paper)

Honeycomb structure layer 2: A paper honeycomb (thickness: 20 mm, cell shape: hexagonal, cell size: 8 mm, made of resin-impregnated paper)

Honeycomb structure layer 3: An aluminum honeycomb (thickness: 15 mm, cell shape: hexagonal, cell size: 12 mm, made of aluminum)

The void content of the interiors of the cells of the honeycomb structure layer is calculated form the formula below. The void content is defined as the ratio of the measured thickness of the interiors of the cells of the honeycomb structure layer after the preparation of the laminate to the measured thickness of the interiors of the cells of the honeycomb structure layer before the preparation of the laminate (n = 3).

$$\text{Void content (\%)} = 100 \times \frac{\text{(the thickness of the interiors of the cells after the preparation)}}{\text{(the thickness of the interiors of the cells before the preparation)}}$$

(Example 1)

Heat storage composition 1 was cast on surface layer 1. Before heat storage composition 1 was cured, shielding layer 1 was further placed thereon. Heat storage composition 1 was then cured. Honeycomb structure layer 1 was then bonded to shielding layer 1 with an adhesive to form a laminate.

The resulting laminate had the structure shown in Fig. 3(h). The heat storage layer had a thickness of 3 mm, and the interiors of the cells of honeycomb structure layer 1 had a void content of 100%.

(Example 2)

A laminate was prepared in the same manner as in Example 1, except that shielding layer 2 was used instead of shielding layer 1.

The resulting laminate had the structure shown in Fig. 3(h). The heat storage layer had a thickness of 3 mm, and the interiors of the cells of honeycomb structure layer 1 had a void content of 100%.

(Example 3)

A laminate was prepared in the same manner as in Example 1, except that heat storage composition 2 was used instead of heat storage composition 1.

The resulting laminate had the structure shown in Fig. 3(h). The heat storage layer had a thickness of 3 mm, and the interiors of the cells of honeycomb structure layer 1 had a void content of 100%.

(Example 4)

Heat storage composition 1 was cast on surface layer 1. Before heat storage composition 1 was cured, honeycomb structure layer 1 was placed thereon. Heat storage composition 1 was then cured to form a laminate.

The resulting laminate had the structure shown in Fig. 3(d). The interiors of the cells of honeycomb structure layer 1 were partially filled with the heat storage layer, and the interiors of the cells had a void content of 80%. The heat storage layer had a thickness of 3 mm.

(Example 5)

A laminate was prepared in the same manner as in Example 4, except that the heat storage layer had a different thickness.

The resulting laminate had the structure shown in Fig. 3(d). The interiors of the cells of honeycomb structure layer 1 were partially filled with the heat storage layer, and the interiors of the cells had a void content of 66%. The heat storage layer had a thickness of 5 mm.

(Example 6)

A laminate was prepared in the same manner as in Example 1, except that the heat storage layer had a different thickness.

The resulting laminate had the structure shown in Fig. 3(h). The heat storage layer had a thickness of 5 mm, and the interiors of the cells of honeycomb structure layer 1 had a void content of 100%.

(Example 7)

A laminate was prepared in the same manner as in Example 4, except that the heat storage layer had a different thickness.

The resulting laminate had the structure shown in Fig. 3(d). The interiors of the cells of honeycomb structure layer 1 were partially filled with the heat storage layer, and the interiors of the cells had a void content of 93%. The heat storage layer had a thickness of 1 mm.

(Example 8)

Surface layer 1, heat storage layer 3, and shielding layer 1 were stacked in this order with an adhesive interposed between two adjacent layers. Shielding layer 1 and honeycomb structure layer 1 were further bonded to the stack with an adhesive to form a laminate.

The resulting laminate has the structure shown in Fig. 3(h). The heat storage layer had a thickness of 3 mm, and the interiors of the cells of honeycomb structure layer 1 had a void content of 100%.

(Example 9)

A laminate was prepared in the same manner as in Example 4, except that surface layer 2 was used instead of surface layer 1.
The resulting laminate had the structure shown in Fig. 3 (d). The interiors of the cells of honeycomb structure layer 1 were partially filled with the heat storage layer, and the interiors of the cells had a void content of 80%. The heat storage layer had a thickness of 3 mm.

(Example 10)

A laminate was prepared in the same manner as in Example 4, except that surface layer 3 was used instead of surface layer 1.
The resulting laminate had the structure shown in Fig. 3(d). The interiors of the cells of honeycomb structure layer 1 were partially filled with the heat storage layer, and the interiors of the cells had a void content of 80%. The heat storage layer had a thickness of 3 mm.

(Example 11)

A laminate was prepared in the same manner as in Example 4, except that honeycomb structure layer 2 was used instead of honeycomb structure layer 1.
The resulting laminate had the structure shown in Fig. 3 (d). The interiors of the cells of honeycomb structure layer 2 were partially filled with the heat storage layer, and the interiors of the cells had a void content of 85%. The heat storage layer had a thickness of 3 mm.

(Example 12)

A laminate was prepared in the same manner as in Example 4, except that honeycomb structure layer 3 was used instead of honeycomb structure layer 1.
The resulting laminate had the structure shown in Fig. 3(d). The interiors of the cells of honeycomb structure layer 3 were partially filled with the heat storage layer, and the interiors of the cells had a void content of 80%. The heat storage layer had a thickness of 3 mm.

(Comparative Example 1)

Heat storage composition 1 was cast on surface layer 1. Before heat storage composition 1 was cured, honeycomb structure layer 1 was placed thereon. Heat storage composition 1 was then cured to form a laminate.
In the resulting laminate, the interiors of the cells of honeycomb structure layer 1 were entirely filled with the heat storage layer, and the interiors of the cells had a void content of 0%.

(Comparative Example 2)

Honeycomb structure layer 1 was bonded to surface layer 1 with an adhesive to form a laminate.
The laminates obtained in Examples 1 to 12 and Comparative Examples 1 and 2 were subjected to test 1 shown below.

(Test 1)

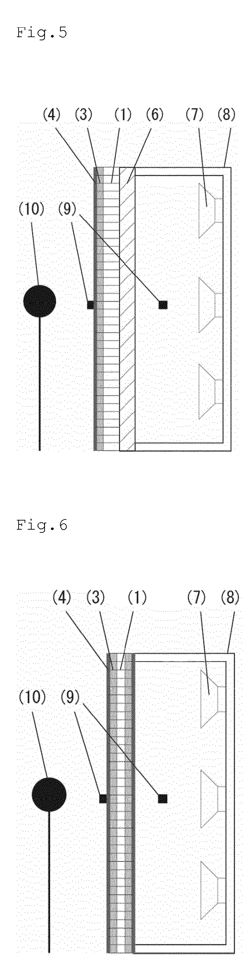

As shown in Fig. 5, a calcium silicate sheet (1,800 mm x 600 mm, thickness 6 mm) and the laminate were bonded together in such a manner that the surface layer was placed on the front side. An infrared lamp was then so placed that the calcium silicate sheet could be irradiated with infrared light. A temperature sensor (for the outside temperature) was placed 30 cm apart from the surface of the calcium silicate sheet, and the calcium silicate sheet was surrounded by polystyrene foam so that the heat from the infrared lamp was prevented from escaping. A temperature sensor (for the inner wall surface temperature) was also placed on the surface of the surface layer, and a black bulb thermometer (diameter 15 cm, for the space temperature) for measuring the radiant heat from the surface layer was placed 30 cm apart from the surface layer, so that a test system was obtained.

The resulting test system was placed at the center of a clean room (12 m$^2$, height 2.5 m) and then allowed to stand for 3 hours while the temperature in the clean room was kept at 30°C. After 3 hours, the temperature in the clean room was changed to 25°C, at which the infrared lamp was turned on, and the temperature was measured with each temperature sensor. As to the results, Tables 1 and 2 show each temperature measured 2 hours after the infrared lamp was turned on.

The laminates obtained in Examples 1 and 4 were subjected to test 2 shown below.

(Test 2)

The laminates obtained in Examples 1 and 4 were first subjected to 60 cycles of 12 hours standing at 40°C and subsequent 12 hours standing at 20°C and then subjected to test 1 in the same manner. As a result, Example 1 showed a space temperature of 26°C, an inner wall surface temperature of 28°C, and an outside temperature of 50°C, and Example 4 showed a space temperature of 26°C, an inner wall surface temperature of 29°C, and an outside temperature of 50°C.

(Example 13)

Two surface layers 1 were prepared. Heat storage composition 1 was cast on each surface layer 1. Before heat storage composition 1 was cured, shielding layer 1 was place thereon. Each heat storage composition 1 was cured to form a laminate. Honeycomb structure layer 1 was then sandwiched between the resulting two laminates in such a manner that each shielding layer 1 was in contact with honeycomb structure layer 1. Honeycomb structure layer 1 and the laminates were bonded together with an adhesive to form a laminate.

The resulting laminate had the structure shown in Fig. 4(j). Each heat storage layer had a thickness of 3 mm, and the interiors of the cells of honeycomb structure layer 1 had a void content of 100%.

(Example 14)

Two surface layers 1 were prepared. Heat storage composition 1 was cast on each surface layer 1. Before heat storage composition 1 was cured, honeycomb structure layer 1 was sandwiched between two heat storage compositions 1. Heat storage compositions 1 were then cured to form a laminate.

The resulting laminate had the structure shown in Fig. 4(d). The interiors of the cells of honeycomb structure layer 1 were partially filled with the heat storage layer, and the interiors of the cells had a void content of 60%. Each heat storage layer had a thickness of 3 mm.

(Example 15)

Two surface layers 1 were prepared. Heat storage composition 1 was cast on one of surface layers 1. Before heat storage composition 1 was cured, honeycomb structure layer 1 was placed thereon. Heat storage composition 1 was then cured to form laminate 1.

Heat storage composition 1 was cast on the remaining one of surface layers 1. Before heat storage composition 1 was cured, shielding layer 1 was placed thereon. Heat storage composition 1 was then cured to form laminate 2.

Subsequently, laminates 1 and 2 were stacked with an adhesive in such a manner that honeycomb structure layer 1 of laminate 1 was in contact with shielding layer 1 of laminate 2, so that a laminate was obtained.

The resulting laminate had the structure shown in Fig. 4(f). The interiors of the cells of honeycomb structure layer 1 were partially filled with the heat storage layer, and the interiors of the cells had a void content of 80%. Each heat storage layer had a thickness of 3 mm.

(Example 16)

A laminate was prepared in the same manner as in Example 14, except that the heat storage layer had a different thickness.

The resulting laminate had the structure shown in Fig. 4(d). The interiors of the cells of honeycomb structure layer 1 were partially filled with the heat storage layer, and the interiors of the cells had a void content of 87%. Each heat storage layer had a thickness of 1 mm.

(Example 17)

Two surface layers 1 were prepared. Heat storage composition 1 was cast on one of surface layers 1. Before heat storage composition 1 was cured, shielding layer 1 was placed thereon. Heat storage composition 1 was then cured to form laminate 3.

Honeycomb structure layer 1 was sandwiched between laminate 3 and the remaining one of surface layers 1 in such a manner that honeycomb structure layer 1 was in contact with surface layer 1 and shielding layer 1 of laminate 3. They were bonded together with an adhesive to form a laminate.

The resulting laminate had the structure shown in Fig. 3(i). The heat storage layer had a thickness of 3 mm, and the interiors of the cells of honeycomb structure layer 1 had a void content of 100%.

(Example 18)

A laminate was prepared in the same manner as in Example 14, except that the heat storage layer had a different thickness.

The resulting laminate had the structure shown in Fig. 4(d). The interiors of the cells of honeycomb structure layer 1 were partially filled with the heat storage layer, and the interiors of the cells had a void content of 33%. Each heat storage layer had a thickness of 5 mm.

(Comparative Example 3)

The interiors of the cells of honeycomb structure layer 1 were filled with heat storage composition 1. Honeycomb structure layer 1 was then sandwiched between two surface layers 1, and heat storage composition 1 was cured, so that a laminate was obtained.

In the resulting laminate, the interiors of the cells of honeycomb structure layer 1 were entirely filled with the heat storage layer, and the interiors of the cells had a void content of 0%.

(Comparative Example 4)

Two surface layers 1 were prepared. Honeycomb structure layer 1 was sandwiched between two surface layers 1, and they were bonded together with an adhesive to form a laminate.

The laminates obtained in Examples 13 to 18 and Comparative Examples 3 and 4 were subjected to test 3 shown below.

(Test 3)

As shown in Fig. 6, an infrared lamp was so placed that one surface layer of the laminate could be irradiated with infrared light. A temperature sensor (for the outside temperature) was placed 30 cm apart from the surface layer, and the laminate was surrounded by polystyrene foam so that the heat from the infrared lamp was prevented from escaping. A temperature sensor (for the inner wall surface temperature) was also placed on the surface of the other surface layer, and a black bulb thermometer (diameter 15 cm, for the space temperature) for measuring the radiant heat from the surface layer was placed 30 cm apart from the surface layer, so that a test system was obtained.

The resulting test system was placed at the center of a clean room (12 $m^2$, height 2.5 m) and then allowed to stand for 3 hours while the temperature in the clean room was kept at 30°C. After 3 hours, the temperature in the clean room was changed to 25°C, at which the infrared lamp was turned on, and the temperature was measured with each temperature sensor. As to the results, Table 3 shows each temperature measured 2 hours after the infrared lamp was turned on.

[Table 1]

| | Example 1 | Example 2 | Example 3 | Example 4 | Example 5 | Example 6 | Example 7 | Example 8 |
|---|---|---|---|---|---|---|---|---|
| Surface layer | 1(0.4) | 1(0.4) | 1 (0.4) | 1(0.4) | 1 (0.4) | 1 (0.4) | 1(0.4) | 1(0.4) |
| Heat storage layer | 1 (3) | 1 (3) | 2 (3) | 1 (3) | 1 (5) | 1 (5) | 1 (1) | 3 (3) |
| Shielding layer | 1(0.05) | 2 (0.1) | 1(0.05) | - | - | 1(0.05) | - | 1(0.05) |

(continued)

|  | Example 1 | Example 2 | Example 3 | Example 4 | Example 5 | Example 6 | Example 7 | Example 8 |
|---|---|---|---|---|---|---|---|---|
| Honeycomb structure layer | 1 (15) | 1 (15) | 1 (15) | 1 (15) | 1 (15) | 1 (15) | 1 (15) | 1 (15) |
| Void content | 100% | 100% | 100% | 80% | 66% | 100% | 93% | 100% |
| Test 1 |  |  |  |  |  |  |  |  |
| Space temperature | 26°C | 26°C | 26°C | 26°C | 27°C | 26°C | 29°C | 26°C |
| Inner wall surface temperature | 28°C | 28 C | 28°C | 28°C | 29°C | 29°C | 30°C | 28°C |
| Outside temperature | 50°C | 50°C | 50°C | 50°C | 50°C | 50°C | 50°C | 50°C |

The numbers in parentheses in Table 1 to Table 3 shows the thickness (mm).

[Table 2]

|  | Example 9 | Example 10 | Example 11 | Example 12 | Comparative Example 1 | Comparative Example 2 |
|---|---|---|---|---|---|---|
| Surface layer | 2(0.6) | 3(0.4) | 1(0.4) | 1(0.4) | 1(0.4) | 1(0.4) |
| Heat storage layer | 1(3) | 1(3) | 1(3) | 1(3) | 1(15) | - |
| Shielding layer | - | - | - | - | - | - |
| Honeycomb structure layer | 1(15) | 1(15) | 2 (20) | 3(15) | 1(15) | 1 (15) |
| Void content | 80% | 80% | 85% | 80% | 0% | 100% |
| Test 1 |  |  |  |  |  |  |
| Space temperature | 26°C | 26°C | 25°C | 27°C | 31°C | 35°C |
| Inner wall surface temperature | 28°C | 28°C | 28°C | 28°C | 33°C | 38°C |
| Outside temperature | 50°C | 50°C | 50°C | 50°C | 50°C | 50°C |

[Table 3]

| | Example 13 | Example 14 | Example 15 | Example 16 | Example 17 | Example 18 | Comparative Example 3 | Comparative Example 4 |
|---|---|---|---|---|---|---|---|---|
| Surface layer | 1(0.4) | 1(0.4) | 1(0.4) | 1(0.4) | 1(0.4) | 1(0.4) | 1(0.4) | 1(0.4) |
| Heat storage layer | 1(3) | 1(3) | 1(3) | 1 (1) | 1(3) | 1(5) | 1(15) | - |
| Shielding layer | 1(0.05) | - | 1(0.05) | - | 1(0.05) | - | - | - |
| Honeycomb structure layer | 1(15) | 1(15) | 1(15) | 1(15) | 1(15) | 1(15) | 1(15) | 1(15) |
| Shielding layer | 1(0.05) | - | - | - | - | - | - | - |
| Heat storage layer | 1(3) | 1(3) | 1(3) | 1 (1) | - | 1(5) | - | - |
| Surface layer | 1(0.4) | 1(0.4) | 1(0.4) | 1(0.4) | 1(0.4) | 1(0.4) | 1(0.4) | 1(0.4) |
| Void content | 100% | 60% | 80% | 87% | 100% | 33% | 0% | - |
| Test 3 | | | | | | | | |
| Space temperature | 25°C | 25°C | 25°C | 29°C | 26°C | 29°C | 30°C | 35°C |
| Inner wall surface temperature | 27°C | 28°C | 27°C | 30°C | 28°C | 30°C | 32°C | 38°C |
| Outside temperature | 50°C | 50°C | 50°C | 50°C | 50°C | 50°C | 50°C | 50°C |

The results in Tables 1 to 3 show that all the laminates obtained in the examples, which include a stack of the void-containing honeycomb structure layer and the heat storage layer, make it possible to effectively use cool (cool storage) and to suppress the increase in the space temperature or the inner wall temperature even when the outside temperature reaches a high level, and also make it possible to provide high air-conditioning efficiency and to achieve energy saving.

In contrast, it has been found that the laminates with no void in the honeycomb structure layer, such as those obtained in Comparative Examples 1 and 3, cannot suppress the increase in the space temperature or the inner wall temperature when the outside temperature reaches a high level, so that the resulting air-conditioning efficiency is lower than that in the examples, and are not effective for energy saving. It has also been found that the laminates with no heat storage layer, such as those obtained in Comparative Examples 2 and 4, allow the space temperature or the inner wall temperature to increase relatively quickly when the outside temperature reaches a high level, so that the resulting air-conditioning efficiency is lower than that in the examples, and are not effective for energy saving.

**Claims**

1. A laminate including a honeycomb structure layer having a plurality of cells comprising
   a heat storage layer provided on at least one side of the honeycomb structure layer, wherein
   at least a void is present in the cells of the honeycomb structure layer.

2. The laminate according to claim 1, further comprising a base layer provided on one side of the honeycomb structure layer, wherein the heat storage layer is provided on another side of the honeycomb structure layer.

3. The laminate according to claim 1, wherein heat storage layers are provided on both sides of the honeycomb structure layer.

4. The laminate according to any one of claims 1 to 3, further comprising a surface layer provided on an outer side of the heat storage layer.

5. The laminate according to any one of claims 1 to 4, further comprising a shielding layer provided between the honeycomb structure layer and the heat storage layer.

Fig.1

(3)  (1) (2)

Fig.2

(4)

(3)  (1) (2)

Fig.3

(a)　(b)　(c)　(d)　(e)　(f)

(3)　(1)　(2)　(4)

(5)

(g)　(h)　(i)　(j)

Fig.4

Fig.5

Fig.6

**INTERNATIONAL SEARCH REPORT**

| International application No. |
| --- |
| PCT/JP2014/072577 |

A.  CLASSIFICATION OF SUBJECT MATTER
*B32B3/12*(2006.01)i, *B32B7/02*(2006.01)i

According to International Patent Classification (IPC) or to both national classification and IPC

B.  FIELDS SEARCHED

Minimum documentation searched (classification system followed by classification symbols)
B32B1/00-43/00, E04B1/62-1/99

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2000-314187 A  (Dainippon Printing Co., Ltd.), 14 November 2000 (14.11.2000), claims 2, 4, 12 to 15; paragraphs [0001], [0009]; examples (Family: none) | 1-5 |
| Y | JP 2007-70969 A  (Marunaka Kensetsu Yugen Kaisha), 22 March 2007 (22.03.2007), claims 1, 5; paragraphs [0001], [0008], [0012]; fig. 1 (Family: none) | 1-5 |

☒  Further documents are listed in the continuation of Box C.       ☐  See patent family annex.

| | |
| --- | --- |
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    24 October, 2014 (24.10.14) | Date of mailing of the international search report<br>    11 November, 2014 (11.11.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/072577

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 110069/1985 (Laid-open No. 19304/1987)<br>(Nippon Sheet Glass Co., Ltd.),<br>05 February 1987 (05.02.1987),<br>claims; industrial field of application; page 6, lines 1 to 8; examples; fig. 1<br>(Family: none) | 1-5 |
| Y | Microfilm of the specification and drawings annexed to the request of Japanese Utility Model Application No. 146478/1981 (Laid-open No. 51144/1983)<br>(Showa Aluminum Corp.),<br>06 April 1983 (06.04.1983),<br>claims; page 2, lines 5 to 8; page 3, lines 8 to 10; fig. 1<br>(Family: none) | 1-5 |
| A | JP 9-512219 A (Gateway Technologies, Inc.),<br>09 December 1997 (09.12.1997),<br>claims 1, 8; page 14, line 19 to page 15, line 15; fig. 6 to 8<br>& JP 2995091 B2　　　　& US 5532039 A<br>& EP 764081 A1　　　　& WO 1995/029057 A1<br>& DE 69533394 D　　　& DE 69533394 T<br>& AU 2362295 A　　　& CA 2188053 A | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008053853 A